# EUROPEAN PATENT SPECIFICATION

(11) **EP 1 982 052 B1**
(45) Date of publication and mention of the grant of the patent: **31.03.2010**
(21) Application number: 07748901.1
(22) Date of filing: 12.01.2007
(51) Int. Cl.: F01K 23/06, C10J 3/00, F02C 3/28

(54) **INTEGRATED GASIFICATION COMBINED CYCLE WITH PREHEATING OF NITROGEN / OXYGEN FROM AIR SEPARATOR**
KOMBINIERTER GAS- UND DAMPFTURBINEN-PROZESS MIT INTEGRIERTER KOHLEVERGASUNG UND VORHEIZUNG VON STICKSTOFF BZW. SAUERSTOFF AUS EINER LUFTZERLEGUNGSANLAGE
INTEGRATION AVANCEE POUR AMELIORER LE RENDEMENT D'UN CYCLE COMBINE AVEC GAZEIFICATION INTEGREE

(30) Priority: 09.02.2006 US 350560
(43) Date of publication of application: 22.10.2008
(73) Proprietor: Siemens Energy, Inc., Orlando, FL 32826-2399 (US)
(72) Inventor: BRIESCH, Michael S., Orlando, Florida 32828 (US); DEEN, Philip G., Enterprise, Florida 32725 (US); SULLIVAN, Terrence B., Orlando, Florida 32801 (US)
(74) Representative: McGowan, Nigel George
(86) International application number: PCT/US2007/000972
(87) International publication number: WO 2007/094908

(56) References cited:
- EP-A- 0 453 059
- EP-A- 0 634 562
- US-A- 4 099 383
- US-A- 5 319 924
- US-A- 5 501 078
- US-A- 5 865 023

## Description

### FIELD OF THE INVENTION

The present invention is directed generally to gas turbine systems, and more particularly to integrated gasification combined cycle gas turbine systems.

### BACKGROUND OF THE INVENTION

The utilization of coal in the prior art has been minimized due to undesirable emissions, such as oxides of nitrogen and sulfur, particulate emissions and greenhouse gases such as carbon dioxide. As a result, there have been efforts to reduce these emissions and improve fuel efficiency of coal plants.

One of the systems that have been developed is the Integrated Gasification Combined Cycle (IGCC) system for use in power generation. IGCC systems were devised as a way to use coal as the source of fuel in a gas turbine plant. IGCC systems are clean and generally more efficient than prior art coal plants.

IGCC is a combination of two systems. The first system is coal gasification, which uses coal to create a clean-burning synthetic gas ("syngas"). The gasification portion of the IGCC plant produces syngas, which may then be used to fuel a combustion turbine. Coal is combined with oxygen in a gasifier to produce the syngas, hydrogen and carbon monoxide. The syngas may then be cleaned by a gas cleanup process. After cleaning, the syngas may be used in the combustion turbine to produce electricity.

The second system is a combined-cycle, or power cycle, which is an efficient method of producing electricity commercially. A combined cycle includes a combustion turbine/generator, a heat recovery steam generator (HRSG), and a steam turbine/generator. The exhaust heat from the combustion turbine may be recovered in the HRSG to produce steam. This steam then passes through a steam turbine to power another generator, which produces more electricity. A combined cycle is generally more efficient than conventional power generating systems because it re-uses waste heat to produce more electricity.

IGCC systems offer several advantages of IGCC over current conventional coal-based power generation systems. One advantage is reduced emissions. Another aspect of IGCC plants is that emissions clean-up, including removal of sulfur and carbon dioxide, may be effected upstream of the combustor system in the fuel stream. Since this stream is far smaller than the entire flue gas stream, emissions removal equipment for an IGCC plant are lower than for a conventional coal plant of like output.

IGCC systems offer other advantages, such as higher efficiency, less coal used, higher turbine outputs, and/or the production of additional chemical by-products, such as hydrogen, which may be used as an alternative source of energy in other developing technologies.

Nevertheless, IGCC systems may still suffer from reduced efficiencies as compared to other systems. Since syngas has a lower heating value than other fuels, more syngas is needed to produce a selected turbine temperature. In addition, the product nitrogen stream from the Air Separation Unit (ASU) Island of an Integrated Gasification Combined Cycle (IGCC) plant is at elevated temperatures, therefore requiring equipment for reducing the heat prior to venting.

Accordingly, it would be beneficial to provide a system that utilizes coal that has increased efficiencies as compared to prior art systems. It would also be beneficial to increase the integration of the components in the IGCC to increase efficiency and/or power out put of the IGCC systems.

US-A-5 865 023 discloses a method for improving the efficiency of a gasification combined cycle system for the coproduction of electric power and one or more chemical or liquid fuel products from a synthesis gas feed containing hydrogen and carbon monoxide. Waste heat is recovered from the chemical reaction system in the form of heated water which is used to heat and humidify one or more gas streams introduced into the combustor of the combined cycle system gas turbine. Waste refrigeration recovered from the synthesis gas purification system optionally is used to cool the air inlet to the gas turbine compressor.

In EP-A-0 634 562 an integrated gasification humid air turbine is improved by (a) supplying at least a portion of the compressed air to the cryogenic air separation unit by withdrawing a portion of the compressed, gas turbine feed air from the gas turbine feed air compressor; and (b) utilizing at least a portion of the heat of compression of the oxygen product to heat water to saturate the compressed, gas turbine feed air. At least a portion of the waste nitrogen product can be fed to an intermediate stage of the gas turbine feed air compressor, or injected as a controllable inert gas coolant, diluent or mass flow enhancing component into at least one piece of equipment selected from the combustor, the transition piece and the gas turbine. Additionally or alternatively, at least a portion of heat inherent to the withdrawn portion of the compressed, gas turbine feed air from the gas turbine feed air compressor can be fed to the cryogenic air separation unit to warm the portion of the oxygen product fed to the gasifier or partial oxidation unit.

### SUMMARY OF THE INVENTION

This present invention provides a method of increasing the efficiency and/or power produced by an integrated gasification combined cycle system by increasing the integration between the air separation unit island of the integrated gasification combined cycle system and the remainder of the system. By integrating product streams from the air separation unit in the remainder of the integrated gasification combined cycle system, heat may be utilized that may have otherwise been lost or used further downstream in the system. The integration helps to increase the efficiency of the gasification reaction used to produce the syngas utilized in the integrated gasification combined cycle system. The integration may additionally help to increase the efficiency of the combustion reaction in the integrated gasification combined cycle system.

According to the present invention there is provided a method for increasing the efficiency of an integrated gasification combined cycle system comprising the steps of: producing a nitrogen gas product stream and an oxygen gas product stream using an air separation unit; feeding the oxygen gas product stream to a gasifier; and producing a syngas stream in the gasifier using the oxygen gas product stream and coal, wherein the nitrogen gas product stream is heated by the syngas stream using a syngas heat exchanger, characterised in that the oxygen gas product stream is heated by the heated nitrogen gas product stream in an oxygen heat exchanger prior to being used in the gasifier.

### BRIEF DESCRIPTION OF THE DRAWINGS

Other objects, features and advantages of the present invention will become apparent upon reading the following detailed description, while referring to the attached drawings, in which:
Figure 1 shows a schematic of a standard IGCC system.
Figure 2 shows a schematic of an IGCC system not in accordance with the present invention but useful for understanding the present invention.
Figure 3 shows a schematic of an IGCC system not in accordance with the present invention but useful for understanding the present invention.
Figure 4 shows a schematic of an IGCC system not in accordance with the present invention but useful for understanding the present invention.
Figure 5 shows a schematic of a first IGCC system according to the present invention.
Figure 6 shows a schematic of a further IGCC system according to the present invention.
Figure 7 shows a schematic of an IGCC system not in accordance with the present invention but useful for understanding the present invention.
Figure 8 shows a schematic of an IGCC system not in accordance with the present invention but useful for understanding the present invention.

### DETAILED DESCRIPTION OF THE INVENTION

The present invention is more particularly described in the following description and examples that are intended to be illustrative only since numerous modifications and variations therein will be apparent to those skilled in the art. As used in the specification and in the claims, the singular form "a," "an," and "the" may include plural referents unless the context clearly dictates otherwise. Also, as used in the specification and in the claims, the term "comprising" may include the embodiments "consisting of" and "consisting essentially of."

The present invention provides a method for increasing the efficiency of an integrated gasification combined cycle (IGCC) gas turbine system. The present invention accomplishes the improved efficiency of the system by increasing the integration between the IGCC and the air separation unit (ASU) portion of the IGCC. In the present invention, heat from one area of the system is transferred and used in another area of the system to increase the overall efficiency of the system.

In the present invention, the improved integration utilizes product gases from the ASU as part of a method for transferring heat from the IGCC system such that it may be used upstream in the IGCC system. A product gas stream may be used to heat the syngas entering the combustor. Since the excess heat is used and not wasted and the syngas enters the combustor at higher temperatures, the system operates at higher efficiencies than prior art systems. In addition, since the heat is recycled, less fuel may be used and more syngas may be generated, which may also increase the efficiency of the system.

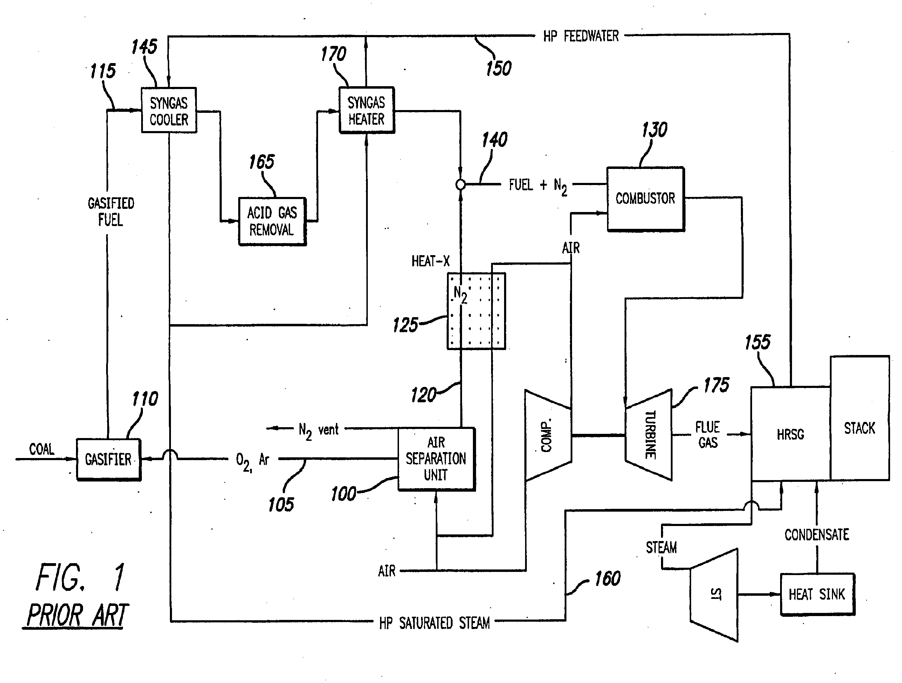

In a standard IGCC system, with reference to Figure 1, the IGCC system includes an ASU 100, which produces an oxygen gas product stream 105 and a nitrogen gas product stream 120. The oxygen product stream 105 and/or the nitrogen product stream 120 is used to increase the efficiency of the IGCC system by integration of these product streams upstream in the system, to help transfer heat in the system, or by generating additional power.

One or more product streams can be used to transfer heat to the gasifier 110, which produces a synthetic gas ("syngas") product stream 115, which may then be used as the fuel source for the combustor 130. The ASU 100, which may be a cryogenic ASU, is used to provide pure or substantially pure oxygen to the gasification reactor and may include a post-compression air bleed from the gas turbine 175. The ASU produces the oxygen gas product stream 105 and the nitrogen gas product stream 120, which are generally below the temperatures of other streams in the IGCC system, such as the syngas stream 115. As a result, one or more of these ASU product streams are utilized as heat sink sources, such that heat may be transferred to one or more other areas of the IGCC wherein the increased temperatures help to increase the efficiency of overall system.

Alternatively, or in addition thereto, the one or more gas product streams from the ASU may be used to transfer heat away from syngas, such as through the use of one or more syngas coolers 145. Since syngas must be cooled prior to being cleaned, cooling the syngas using the one or more product streams from the ASU increases the efficiency of the syngas cleaning and cooling process. The syngas is then cleaned in an acid gas removal stage 165. The syngas from the reactor is generally cleaned before it is used as a gas turbine fuel. The cleanup process typically involves removing sulfur compounds, ammonia, metals, alkalytes, ash, and/or particulates to meet the gas turbine's fuel gas specifications. The syngas may then be heated in a syngas heater 170 before being used in the combustor 130.

The one or more product streams may also be used to increase the heat of the fuel mixture 140 that enters into the combustor 130. For example, the nitrogen gas product stream may be used to dilute the syngas stream to achieve a selected heating value of the fuel mixture 140 entering the combustor. In a standard IGCC system, the nitrogen gas product stream 120, if used to dilute the fuel mixture 140, may first be passed through a heat exchanger 125 which is used to heat the nitrogen stream 120 since the product streams from the ASU 100 are typically at cooler temperatures since most air separation process are performed at sub-zero temperatures. The nitrogen product stream 120 may be further heated, with the heat then being used in the combustor 130 to increase the efficiency of the system.

Accordingly, by using one or more product streams from the ASU as a means to utilize heat that would otherwise be lost and/or used downstream, the efficiency of the IGCC system is increased by increasing the amount of syngas created per unit of coal feedstock supplied, by increasing the temperature of the fuel mixture, and/or by increasing the amount of power generated by the system.

In one arrangement, product nitrogen (N₂) gas that is generated from the Air Separation Unit (ASU) is routed to a heat exchanger where it is heated by the syngas that is produced in the gasifier. After leaving this heat exchanger, the heated nitrogen is mixed with the fuel stream and the mixture enters the combustor of the gas turbine. The syngas is cooled in the heat exchanger. In this arrangement, a portion of the ASU nitrogen product gas may be routed through the heat exchanger; however, it is also contemplated that, in an alternative arrangement, the entire product nitrogen gas stream could be routed in this manner.

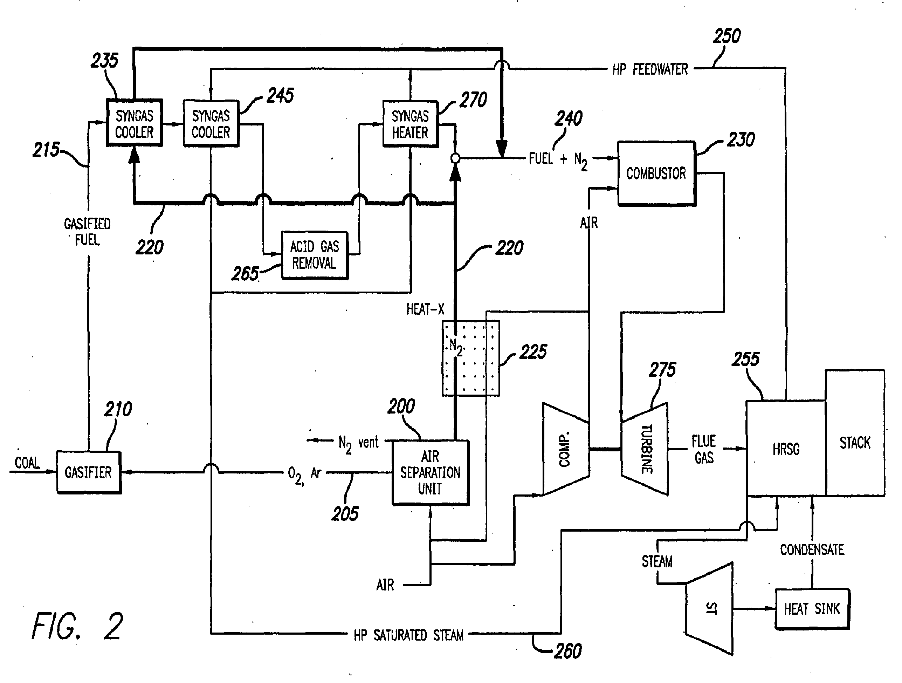

Figure 2 provides a schematic of this arrangement. As shown, the ASU 200 includes an oxygen gas product stream 205 that may be sent to the gasifier 210 for use in forming the syngas product stream 215. The nitrogen product gas stream 220 from the ASU 200 may then be passed through a heat exchanger 225 to heat the nitrogen gas 220. Instead of then being mixed with the syngas to then be fed into the combustor 230, as with some IGCC systems, this arrangement diverts all or a part of the nitrogen gas stream 220 to a first syngas cooler 235, wherein heat from the syngas 215 may be transferred to the nitrogen gas 220, which may then be mixed with the syngas to form the fuel mixture 240 that then enters the combustor 230. Since the syngas is normally cooled to help permit acid gases to be removed, the excess heat, instead of being lost, may now be used to heat the fuel mixture 240 entering the combustor 230, thereby increasing the efficiency of the system. This arrangement may include a syngas cooler 245, which uses feedwater 250 from the HRSG 255 to form steam 260 that may be used to generate power in the HRSG; an acid gas removal stage 265; and a syngas heater 270. Combustion products from the combustor 230 may be sent to gas turbine 275 to produce power, and since the fuel mixture 240 is at a higher temperature, the temperature of the combustion products is higher, thereby producing more power in the turbine.

In an alternative arrangement, product nitrogen (N₂) gas generated from the ASU is mixed with the syngas that is produced in the gasifier, such as through using a mixing valve. The nitrogen stream enters at a much colder temperature than the syngas, resulting in a cooler mixed fuel stream temperature entering the syngas cooler. In this arrangement, a portion of the ASU nitrogen product gas may be routed to the syngas stream; however, it is also contemplated that, in an alternative arrangement, the entire product nitrogen gas stream could be routed in this manner.

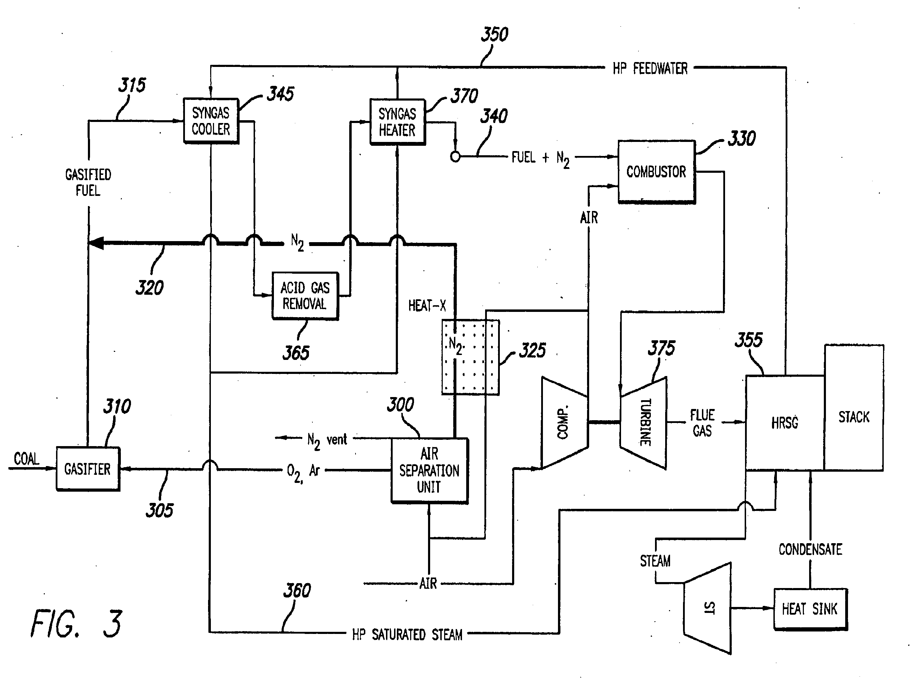

Figure 3 provides a schematic of this arrangement. As shown, the ASU 300 includes an oxygen gas product stream 305 that may be sent to the gasifier 310 for use in forming the syngas product stream 315. The nitrogen product gas stream 320 from the ASU 300 may then be passed through a heat exchanger 325 to heat the nitrogen gas 320. Instead of then being mixed with the syngas just prior to being fed into the combustor 330, this arrangement diverts all or a part of the nitrogen gas stream 320 such that it may be mixed with the syngas stream 315, thereby cooling the syngas 315. Since the syngas is cooled, less heat is needed to cool the mixture in the syngas cooler 345. The stream may then pass through an acid gas removal stage 365 and heater 370 and then enter the combustor 330. This arrangement may use feedwater 350 from the HRSG 355 to form steam 360 that may be used to generate power in the HRSG. Combustion products from the combustor 330 may be sent to gas turbine 375 to produce power.

In yet another alternative arrangement, product nitrogen gas generated from the ASU is mixed with the syngas that is produced in the gasifier, such as through use of a mixing valve. The nitrogen stream enters at a much colder temperature than the syngas, resulting in a mixed fuel stream temperature that can be accepted by the cold gas clean-up system, thus obviating the need for a syngas cooler. In this arrangement, a portion of the ASU nitrogen product gas may be routed to the syngas stream; however, it is also contemplated that, in an alternative arrangement, the entire product nitrogen gas stream could be routed in this manner.

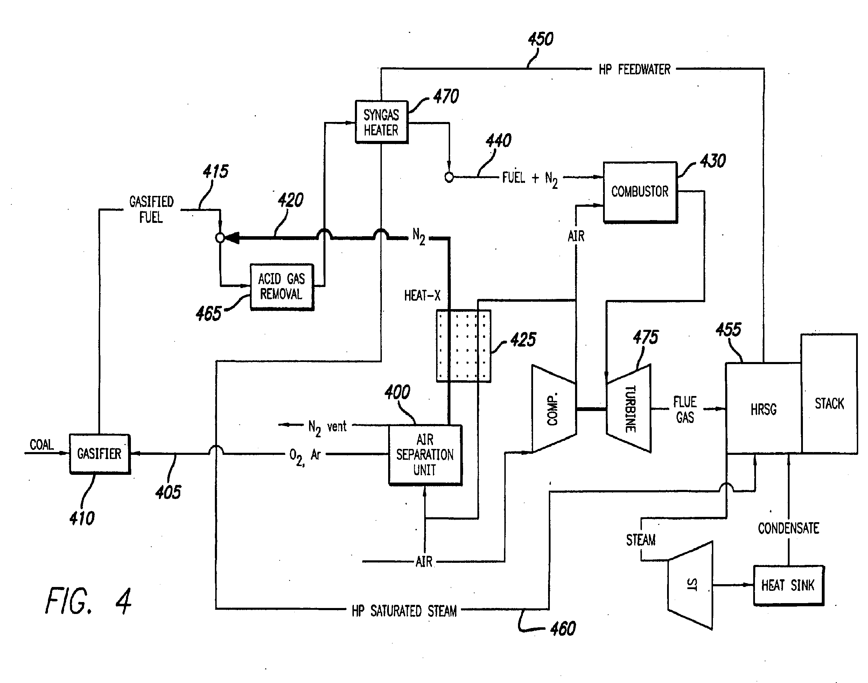

Figure 4 provides a schematic of this arrangement. As shown, the ASU 400 includes an oxygen gas product stream 405 that may be sent to the gasifier 410 for use in forming the syngas product stream 415. The nitrogen product gas stream 420 from the ASU 400 may then be passed through a heat exchanger 425 to heat the nitrogen gas 420. Instead of then being mixed with the syngas just prior to being fed into the combustor 430, this arrangement diverts all or a part of the nitrogen gas stream 420 such that it may be mixed with the syngas stream 415, thereby cooling the syngas 415. Unlike the arrangement described in Figure 3, since the syngas may be cooled with the nitrogen gas, no syngas cooler is used. As such, the nitrogen gas/syngas stream may be passed directly into an acid gas removal stage 465 and then a heater 470 and then may be sent to the combustor 430 as a fuel mixture 440. This arrangement may also use feedwater 450 from the HRSG 455 in the syngas heater 470 to form steam 460 that may be used to generate power in the HRSG. As with the other arrangements, combustion products from the combustor 430 may be sent to gas turbine 475 to produce power.

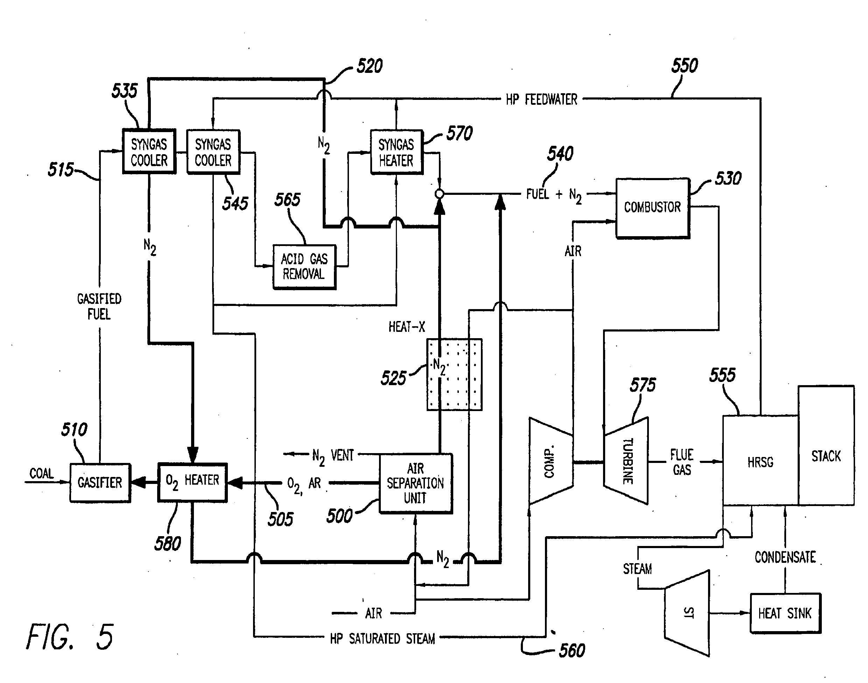

In a first arrangement according to the present invention, the product nitrogen gas stream generated from the ASU is routed to a heat exchanger where it is heated by the syngas that is produced in the gasifier. The heated nitrogen stream is then routed to a heat exchanger where it is cooled by the oxygen stream produced in the ASU. As with the previous arrangements, all or a portion of the ASU product nitrogen stream may be routed through the heat exchanger. In addition, it is possible that only a portion of the oxygen leaving the ASU will be heated prior to entering the gasifier. As shown in Figure 5, a first syngas cooler, such as the one described in Figure 1, may be used downstream of the nitrogen stream heater. However, in an alternative arrangement, it is possible that this cooler would not be used.

Figure 5 provides a schematic of this first arrangement according to the present invention. As shown, the ASU 500 includes an oxygen gas product stream 505 that may be sent to the gasifier 510 for use in forming the syngas product stream 515. The nitrogen product gas stream 520 from the ASU 500 may be passed through a heat exchanger 525 to heat the nitrogen gas 520. Instead of then being mixed with the syngas to then be fed into the combustor 530, this arrangement diverts all or a part of the nitrogen gas stream 520 to a first syngas cooler 535, wherein heat from the syngas 515 may be transferred to the nitrogen gas 520. The heated nitrogen gas may then be sent to an oxygen heater 580 that heats the oxygen prior to entering the gasifier 510. By increasing the temperature of the oxygen, the efficiency of the gasifier 510 may be increased, thereby increasing the amount of syngas generated per unit of coal used as feedstock. The nitrogen stream may then be mixed with the syngas to form the fuel mixture 540 that then enters the combustor 530. As discussed, this arrangement may include a second syngas cooler 545, which uses feedwater 550 from the HRSG 555 to form steam 560 that may be used to generate power in the HRSG; an acid gas removal stage 565; and a syngas heater 570. Combustion products from the combustor 530 may be sent to gas turbine 575 to produce power.

In a further arrangement according to the present invention, which is related to the first arrangement according to the present invention, product nitrogen gas from the ASU may be routed to a heat exchanger where it may be heated by the syngas that is produced in the gasifier. The heated nitrogen stream may then be routed to a heat exchanger where it may be cooled by the oxygen stream produced in the ASU. After leaving this heat exchanger, the nitrogen stream may be fed into another heat exchanger where it is re-heated by the syngas before being mixed with the syngas. As with previous arrangements, all or a portion of the nitrogen gas stream may be routed. Also, in an alternative arrangement, only a portion of the oxygen leaving the ASU may be heated prior to entering the gasifier.

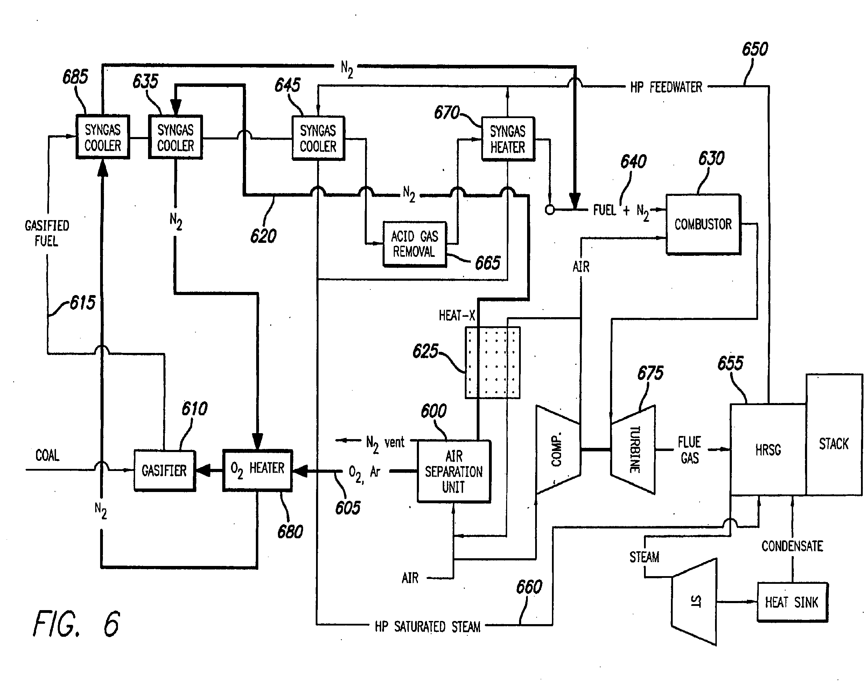

Figure 6 provides a schematic of this further arrangement according to the present invention. As shown, the ASU 600 includes an oxygen gas product stream 605 that may be sent to the gasifier 610 for use in forming the syngas product stream 615. The nitrogen product gas stream 620 from the ASU 600 may then be passed through a heat exchanger 625 to heat the nitrogen gas 620. Instead of then being fed into the combustor 630 with the fuel, this arrangement diverts all or a part of the nitrogen gas stream 620 to a syngas cooler 635, wherein heat from the syngas 615 may be transferred to the nitrogen gas 620. The heated nitrogen gas may then be sent to an oxygen heater 680 that heats the oxygen prior to entering the gasifier 610. As previously discussed, by increasing the temperature of the oxygen, the efficiency of the gasifier 610 is increased, thereby increasing the amount of syngas generated per unit of coal used as feedstock. The nitrogen stream 620 may then be used to cool the syngas 615 using another syngas cooler 685 prior to being mixed with the syngas to form the fuel mixture 640 that then enters the combustor 630. Alternatively, as with the arrangements described in Figures 3 and 4, the nitrogen gas stream 620 may be mixed with the syngas stream directly, such as through a mixing valve. As discussed, this arrangement may include another syngas cooler 645, which uses feedwater 650 from the HRSG 655 to form steam 660 that may be used to generate power in the HRSG; an acid gas removal stage 665; and a syngas heater 670. Combustion products from the combustor 630 may be sent to gas turbine 675 to produce power. It is to be understood, however, that in alternative arrangements, the syngas cooler 685 may be located downstream of the syngas cooler 635, rather than upstream. In addition, syngas cooler 685 may be removed and the nitrogen stream 620 may be mixed with the syngas stream 615 prior to entering syngas cooler 635 or syngas cooler 645.

In still another arrangement, the nitrogen product gas from the ASU is not used and is mixed with the syngas prior to combustion. In this arrangement, however, product oxygen gas generated from the ASU is routed directly to a heat exchanger where it is heated by the syngas that is produced in the gasifier, effecting simultaneous cooling of the gasifier product syngas and heating of the gasifier oxygen feed stream. Again, since the syngas is cooled prior to being cleaned, the cleaning process is more efficient. And since the oxygen gas is heated, the gasification process is more efficient.

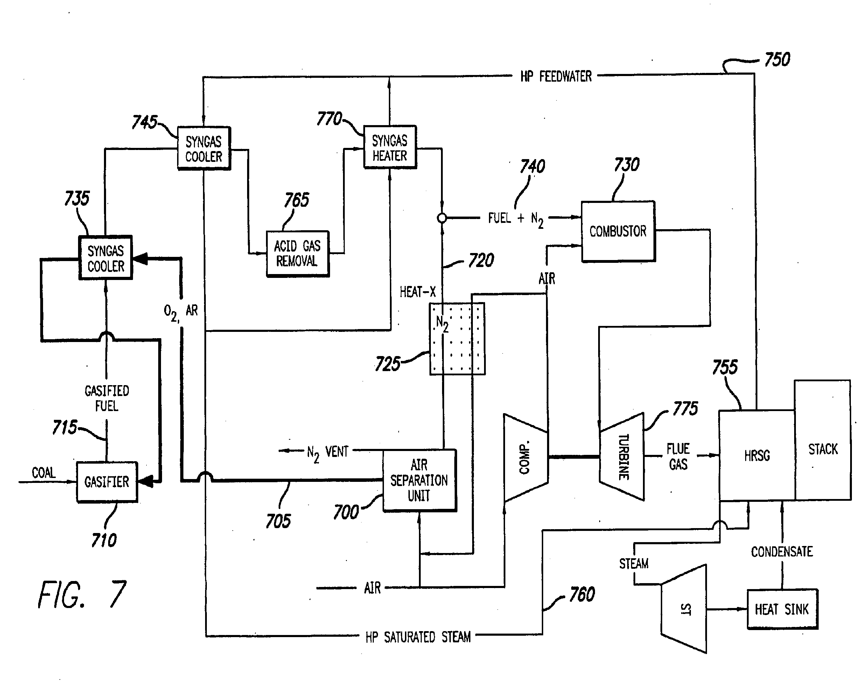

Figure 7 provides a schematic of this arrangement. As shown, the ASU 700 includes an oxygen gas product stream 705 that is sent to the gasifier 710 for use in forming the syngas product stream 715. The nitrogen product gas stream 720 from the ASU 700 may be passed through a heat exchanger 725 to heat the nitrogen gas 720 which is then mixed with the syngas and fed into the combustor 730 as a fuel mixture 740. All or a portion of the oxygen gas product stream 705 is used in a first syngas cooler 735, wherein heat from the syngas 715 is transferred to the oxygen gas 705, which is then used in the gasifier 710. This arrangement includes a second syngas cooler 745, which uses feedwater 750 from the HRSG 755 to form steam 760 that is used to generate power in the HRSG 755; an acid gas removal stage 765; and a syngas heater 770. Combustion products from the combustor 730 are sent to gas turbine 775 to produce power.

In yet another arrangement, a product stream from the ASU is utilized not as a source of heat transfer throughout the system, but as a source of additional power. In one arrangement, the product nitrogen stream is used as an additional source of power. In this arrangement, excess nitrogen that would normally be vented from the ASU is instead routed to a turbine, where it is expanded down to ambient pressure to generate torque for power generation, driving a compressor, or some other application. If the nitrogen stream is at an elevated temperature, then, in one arrangement, it may be routed through the HRSG with the flue gas. In an alternative arrangement, it may be vented to atmosphere.

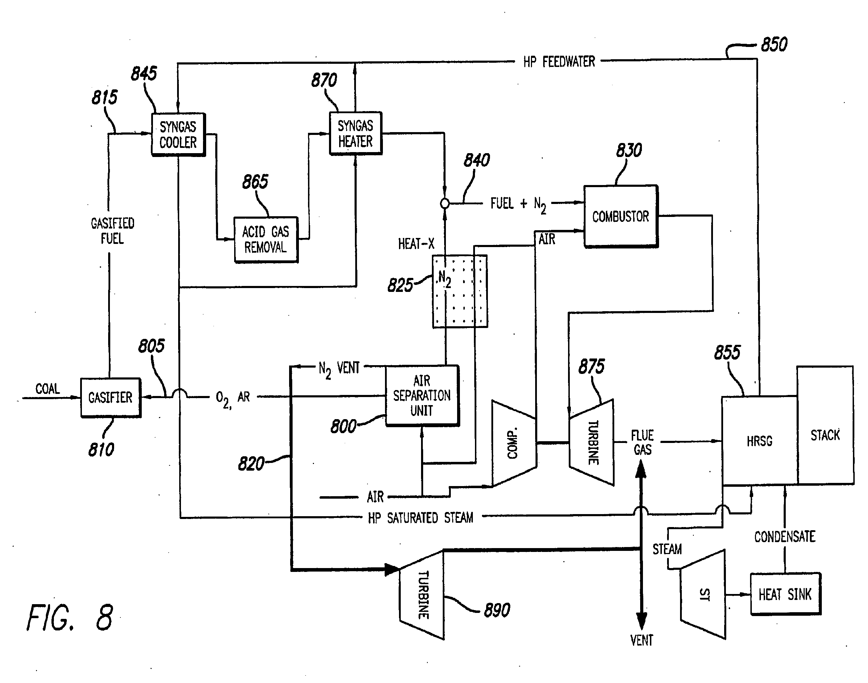

Figure 8 provides a schematic of this arrangement. As shown, the ASU 800 includes an oxygen gas product stream 805 that is sent to the gasifier 810 for use in forming the syngas product stream 815. A nitrogen product gas stream 820 from the ASU 800, which in previous arrangements may be passed through a heat exchanger 825, may, instead, be expanded through a separate turbine 890 to produce additional power. As with other arrangements, all or a portion of the nitrogen gas product stream 820 may be sent to the turbine 890 while another portion is passed through the heat exchanger 825 and mixed with the syngas 815 to form the fuel mixture 840 which is introduced to the combustor 830.

## Claims

1. A method for increasing the efficiency of an integrated gasification combined cycle system comprising the steps of:
producing a nitrogen gas product stream (520 or 620) and an oxygen gas product stream (505 or 605) using an air separation unit (500 or 600);
feeding the oxygen gas product stream (505 or 605) to a gasifier (510 or 610); and
producing a syngas stream (515 or 615) in the gasifier (510 or 610) using the oxygen gas product stream (505 or 605) and coal,
wherein the nitrogen gas product stream (520 or 620) is heated by the syngas stream (515 or 615) using a syngas heat exchanger (535 or 635), **characterised in that** the oxygen gas product stream (505 or 605) is heated by the heated nitrogen gas product stream (520 or 620) in an oxygen heat exchanger (580 or 680) prior to being used in the gasifier (510 or 610).

2. The method of claim 1, wherein, following the oxygen heat exchanger (580 or 680), the nitrogen gas product stream (520 or 620) is mixed with the syngas stream (515 or 615) prior to combustion of the syngas stream (515 or 615) in a combustor (530 or 630).

3. The method of claim 2, wherein, following the oxygen heat exchanger (680) and before mixing of the nitrogen gas product stream (620) with the syngas stream (615), the nitrogen gas product stream (620) is reheated using a second syngas heat exchanger (685).

## Patentansprüche

1. Verfahren zur Steigerung des Wirkungsgrades eines kombinierten Gas- und Dampfturbinen-Systems mit integrierter Kohlevergasung, welches die folgenden Schritte umfasst:
Erzeugen eines Stickstoffgasproduktstroms (520 oder 620) und eines Sauerstoffgasproduktstroms (505 oder 605) unter Verwendung einer Luftzerlegungsanlage (500 oder 600);
Einspeisen des Sauerstoffgasproduktstroms (505 oder 605) in einen Gaserzeuger (510 oder 610); und
Erzeugen eines Synthesegasstroms (515 oder 615) in dem Gaserzeuger (510 oder 610) unter Einsatz des Sauerstoffgasproduktstroms (505 oder 605) und von Kohle,
wobei der Stickstoffgasproduktstrom (520 oder 620) durch den Synthesegasstrom (515 oder 615) unter Verwendung eines Synthesegaswärmetauschers (535 oder 635) erhitzt wird, **dadurch gekennzeichnet, dass** der Sauerstoffgasproduktstrom (505 oder 605) durch den erhitzten Stickstoffgasproduktstrom (520 oder 620) in einem Sauerstoffwärmetauscher (580 oder 680) erhitzt wird, bevor er in dem Gaserzeuger (510 oder 610) genutzt wird.

2. Verfahren gemäß Anspruch 1, wobei nach dem Sauerstoffwärmetauscher (580 oder 680) der Stickstoffgasproduktstrom (520 oder 620) dem Synthesegasstrom (515 oder 615) beigemischt wird, bevor die Verbrennung des Synthesegasstroms (515 oder 615) in einer Brennkammer (530 oder 630) erfolgt.

3. Verfahren gemäß Anspruch 2, wobei nach dem Sauerstoffwärmetauscher (680) und vor der Beimischung des Stickstoffgasproduktstroms (620) zu dem Synthesegasstrom (615) der Stickstoffgasproduktstrom (620) unter Verwendung eines zweiten Synthesegaswärmetauschers (685) nochmals erhitzt wird.

## Revendications

1. Procédé pour accroître le rendement d'un système à cycle combiné avec gazéification intégrée comprenant les étapes consistant :
à produire un courant de produit formant azote gazeux (520 ou 620) et un courant de produit formant oxygène gazeux (505 ou 605) en utilisant une unité de séparation d'air (500 ou 600) ;
à amener le courant de produit formant oxygène gazeux (505 ou 605) jusqu'à un gazéificateur (510 ou 610), et
à produire un courant de gaz de synthèse (515 ou 615) dans le gazéificateur (510 ou 610) en utilisant le courant de produit formant oxygène gazeux (505 ou 605) et du charbon,
dans lequel le courant de produit formant azote gazeux (520 ou 620) est chauffé par le courant de gaz de synthèse (515 ou 615) en utilisant un échangeur de chaleur à gaz de synthèse (535 ou 635), **caractérisé en ce que** le courant de produit formant oxygène gazeux (505 ou 605) est chauffé par le courant de produit formant azote gazeux (520 ou 620) chauffé dans un échangeur de chaleur à oxygène (580 ou 680) avant d'être utilisé dans le gazéificateur (510 ou 610).

2. Procédé selon la revendication 1, dans lequel, après l'échangeur de chaleur à oxygène (580 ou 680), le courant de produit formant azote gazeux (520 ou 620) est mélangé au courant de gaz de synthèse (515 ou 615) avant la combustion du courant de gaz de synthèse (515 ou 615) dans une chambre de combustion (530 ou 630).

3. Procédé selon la revendication 2, dans lequel, après l'échangeur de chaleur à oxygène (680) et avant le mélange du courant de produit formant azote gazeux (620) avec le courant de gaz de synthèse (615), on réchauffe le courant de produit formant azote gazeux (620) en utilisant un second échangeur de chaleur à gaz de synthèse (685).
